(19) Europäisches Patentamt / European Patent Office / Office européen des brevets

(11) **EP 4 769 306 A1**

(12) **EUROPEAN PATENT APPLICATION**

(43) Date of publication:
**01.07.2026 Bulletin 2026/27**

(21) Application number: **25226733.1**

(22) Date of filing: **23.12.2025**

(51) International Patent Classification (IPC):
***G06T 7/20*** (2017.01)

(52) Cooperative Patent Classification (CPC):
**G06T 7/20;** G06T 2207/30196

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 JP 2024232244**

(71) Applicant: **Canon Kabushiki Kaisha**
**Tokyo, 146-8501 (JP)**

(72) Inventor: **TACHIKAWA, Kenta**
**Tokyo, 146-8501 (JP)**

(74) Representative: **TBK**
**Bavariaring 4-6**
**80336 München (DE)**

(54) **INFORMATION PROCESSING DEVICE, METHOD OF CONTROLLING INFORMATION PROCESSING DEVICE, IMAGING DEVICE, INFORMATION PROCESSING SYSTEM, AND COMPUTER PROGRAM, AND COMPUTER READABLE MEDIUM**

(57)    An information processing device executes acquisition processing to acquire a position and a feature amount of each of a plurality of subjects detected from a captured image, and tracking processing to track one of the plurality of subjects in association with a tracked subject that is to be tracked, based on the position and the feature amount of each of the plurality of subjects acquired in the acquisition processing. The tracking processing includes performing a first association to associate any one of the plurality of subjects with the tracked subject using a similarity of the feature amount, and performing a second association to associate any one of the plurality of subjects with the tracked subject using a similarity of the position.

FIG. 1

**Description**

TECHNICAL FIELD

The present disclosure relates to an information processing device that uses tracking technology for a tracked subject, a method of controlling the information processing device, an imaging device, an information processing system, and a computer program, and a computer readable medium.

BACKGROUND

In general, for a camera called a PTZ camera that can adjust pan, tilt, and zoom, a technology is known that detects a subject to be tracked (hereinafter referred to as a tracked subject) designated by a user from a captured image for tracking and imaging. This tracking technology automatically controls the camera's pan, tilt, and zoom to keep the tracked subject in focus. With this tracking technology, even when the tracked subject moves, it continues to be determined that the tracked subject after the movement is the identical subject as the tracked subject before the movement, making it possible to perform tracking and imaging.

Du, Yunhao, et al., "Strongsort: Make deepsort great again.", IEEE Transactions on Multimedia 25 (2023): 8725-8737 proposes an algorithm in which, when a tracked subject is occluded by another subject or an object and then reappears within the field of view, a feature amount related to the appearance of the tracked subject are used to determine whether they are the identical subject.

SUMMARY

However, according to Du, Yunhao, et al., "Strongsort: Make deepsort great again.", IEEE Transactions on Multimedia 25(2023): 8725-8737, when the tracked subject is partially occluded by another subject or an object, the calculation of the feature amount of the appearance of the tracked subject may become unstable. As a result, there arises a problem that the tracked subject is not determined to be the identical subject before and after the movement of the tracked subject.

The present disclosure has been made in consideration of the above-described problem, and provides a technology that enables a tracked subject to be tracked continuously and more reliably.

The present disclosure in its first aspect provides an information processing device as specified in claim 1. Optional features are specified in claim 2 to 10. The present disclosure in its second aspect provides a method of controlling an information processing device as specified in claim 11. The present disclosure in its third aspect provides an imaging device as specified in claim 12. The present disclosure in its fourth aspect provides an information processing system as specified in claim 13. The present disclosure in its fifth aspect provides a computer program as specified in claim 14. The present disclosure in its sixth aspect provides a computer readable medium as specified in claim 15.

According to the technology of the present disclosure, the information processing device can more reliably continue to track a tracked subject.

Features of the present disclosure will become apparent from the following description of embodiments with reference to the attached drawings. The following description of embodiments is described by way of example.

BRIEF DESCRIPTION OF THE DRAWINGS

FIG. 1 is a diagram schematically illustrating a configuration example of an information processing system according to a first embodiment.
FIG. 2 is a block diagram illustrating a configuration example of a camera and a controller, according to the first embodiment.
FIG. 3 is a functional block diagram of the camera and the controller according to the first embodiment.
FIG. 4A is a flowchart of processing executed by the camera according to the first embodiment.
FIG. 4B is a flowchart of processing executed by the controller according to the first embodiment.
FIGS. 5A and 5B are diagrams each illustrating a display example of a captured image and a detection result, according to the first embodiment.
FIG. 6 is a flowchart of recognition processing executed by the camera according to the first embodiment.
FIG. 7 is a flowchart illustrating the calculation of the quality of a feature amount, executed by the camera according to the first embodiment.
FIG. 8 is a flowchart of subject tracking processing executed by the camera according to the first embodiment.

FIGS. 9A and 9B are diagrams illustrating processing of calculating the quality of a feature amount in the first embodiment.

FIG. 10 is a diagram illustrating subject tracking processing in the first embodiment.

FIG. 11 is a diagram illustrating subject identification processing in the first embodiment.

FIG. 12 is a diagram illustrating feature amount extraction processing in a second embodiment.

DESCRIPTION OF THE EMBODIMENTS

The following embodiments will be described in detail with reference to the attached drawings. The following embodiments are not intended to limit the scope of claims. While a plurality of features are described in the embodiments, all of the plurality of features are not necessarily essential to the technology of the present disclosure and the plurality of features may be combined with each other in any way. Moreover, in the accompanying drawings, the same reference numerals are assigned to the same or similar components, and redundant descriptions thereof are omitted.

First Embodiment

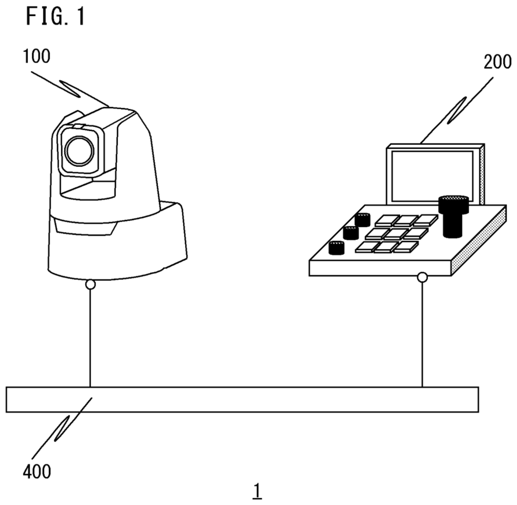

An information processing system according to a first embodiment will be described below. As illustrated in FIG. 1, the information processing system 1 according to the present embodiment has a camera 100 and a controller 200 that is a control device for the camera 100. The camera 100 and the controller 200 are connected to each other via a network 400. As a result, the information processing system 1 according to the present embodiment is configured such that the camera 100 and the controller 200 can communicate data with each other via the network 400. The network 400 includes networks such as a local area network (LAN) and the Internet.

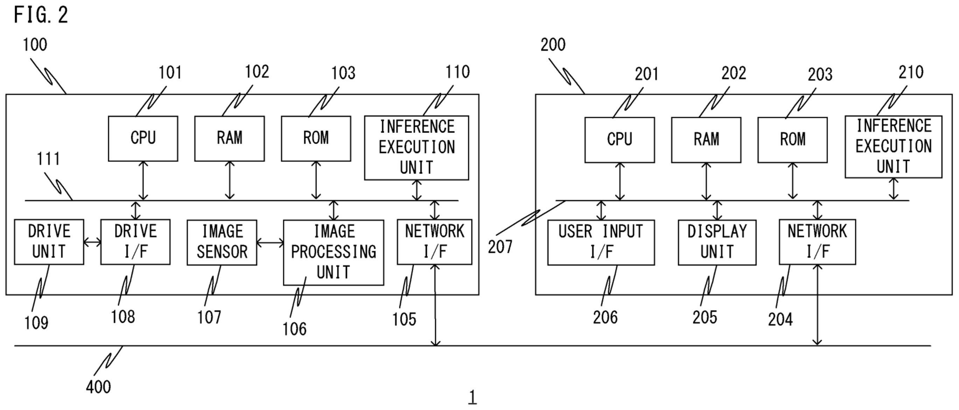

(Configuration of Each Device) Next, a hardware configuration example of each of the camera 100 and the controller 200 will be described with reference to a block diagram of FIG. 2. The configuration illustrated in FIG. 2 is merely an example of the hardware configurations of the camera 100 and the controller 200, and can be changed and/or modified as appropriate.

First, the hardware configuration example of the camera 100 will be described. The camera 100 is an information processing device and also an imaging device, having a mechanism that allows pan and tilt operations to change the imaging direction by the device itself rotating. Furthermore, the camera 100 also detects a subject from a captured image and changes the imaging direction based on the detection result of the subject.

The CPU 101 executes various types of processing using computer programs and data stored in a random access memory (RAM) 102. Thus, the central processing unit (CPU) 101 controls the operation of the entire camera 100 and also controls the execution of various types of processing that will be described as processing to be performed by the camera 100.

The RAM 102 is a high-speed storage device such as a dynamic random-access memory (DRAM) and the like. The RAM 102 has an area for storing computer programs and data to be loaded from a read-only memory (ROM) 103 or a storage device. The RAM 102 also has an area for storing captured images output from an image processing unit 106. Furthermore, the RAM 102 has an area for storing various types of information received from the controller 200 via a network I/F 105, and an area used by the CPU 101 or an inference execution unit 110 when executing various types of processing. Thus, the RAM 102 provides an area for the camera 100 to execute various types of processing as appropriate.

The ROM 103 stores setting data for the camera 100, computer programs and data related to the startup of the camera 100, computer programs and data related to the basic operations of the camera 100, and the like. The ROM 103 also stores computer programs and data for causing the CPU 101 and the inference execution unit 110 to execute or control various types of processing that will be described as processing to be performed by the camera 100.

The network I/F 105 is an interface for connecting to the network 400, and is responsible for communication with an external device such as the controller 200 via a communication medium such as ETHERNET (registered trademark). For communication, a serial communication I/F may be additionally used.

An image processing unit 106 converts a video signal output from an image sensor 107 into a captured image that is data in a predetermined format, optionally compresses the captured image generated by the conversion, and then outputs it to the RAM 102. The image processing unit 106 may perform on the video represented by the video signal acquired from the image sensor 107 various types of processing, including image quality adjustments such as color correction, exposure correction, and sharpness correction, crop processing to cut out only a specified region, and the like. These types of processing may also be performed in accordance with instructions received from the controller 200 via the network I/F 105.

The image sensor 107 receives light reflected from a subject, converts the brightness and color of the received light into electric charges, and outputs a video signal based on the result of the conversion. The image sensor 107 to be used may be, for example, a photodiode, a charged coupled device (CCD) sensor, or a complementary metal oxide semiconductor (CMOS) sensor.

A drive I/F 108 is an interface for transmitting and receiving instruction signals such as control signals to and from a drive unit 109. The drive unit 109 is a rotation mechanism for changing the imaging direction of the camera 100, and includes a mechanical drive system, a motor as a drive source, and the like. The drive unit 109 performs pan and tilt operations to change the imaging direction horizontally and vertically, and a zoom operation to optically change the imaging angle of view, in accordance with instructions received from the CPU 101 via the drive I/F 108.

The inference execution unit 110 performs inference processing to estimate the presence or absence of a subject in a captured image, the position (region) of each subject, and the like, and processing to extract an appearance feature amount of the captured image included in the estimated position. The inference execution unit 110 is, for example, a computation device specialized for image processing and inference processing, such as a graphics processing unit (GPU). In general, it is effective to use such a GPU for the inference processing executed by the inference execution unit 110. However, processing equivalent to the inference processing may also be implemented by a reconfigurable logic circuit, such as a field programmable gate array (FPGA). The CPU 101 may be responsible for the processing of the inference execution unit 110.

The storage device of the camera 100 is a non-volatile storage device such as a flash memory, a hard disk drive (HDD), a solid state drive (SSD), a secure digital (SD) card, and the like. The storage device stores computer programs such as an operating system (OS), and data. The storage device is also used as a temporary storage area for various types of data. Some or all of the computer programs and data stored in the ROM 103 may be stored in the storage device.

The CPU 101, the RAM 102, the ROM 103, the network I/F 105, the image processing unit 106, the drive I/F 108, the inference execution unit 110, and the storage device are each connected to a system bus 111.

Next, the controller 200 will be described. The controller 200 receives a captured image and a detection result, which are transmitted from the camera 100 via the network 400, and transmits to the camera 100 a selection result of a tracked subject based on a user operation. The user is allowed to select a tracked subject using the controller 200 of the information processing system 1 and use the camera 100 to perform tracking and imaging on the tracked subject selected through the controller 200.

A CPU 201 executes various types of processing using computer programs and data stored in a RAM 202. As a result, the CPU 201 controls the operation of the entire controller 200, and also executes or controls various types of processing that will be described below as processing to be performed by the controller 200.

The RAM 202 is a high-speed storage device such as a DRAM. The RAM 202 has an area for storing computer programs and data to be loaded from a ROM 203 or a storage device, and an area for storing various types of data received from the camera 100 via a network I/F 204. Furthermore, the RAM 202 also has an area used by the CPU 201 and an inference execution unit 210 when executing various types of processing. Thus, the RAM 202 provides an area for the controller 200 to execute various types of processing as appropriate.

The ROM 203 stores setting data for the controller 200, computer programs and data related to the startup of the controller 200, computer programs and data related to the basic operation of the controller 200, and the like.

The inference execution unit 210 performs inference processing to estimate the presence or absence, position, and the like of a subject from a captured image. In general, it is effective to use of a GPU for the inference processing executed by the inference execution unit 210. However, processing equivalent to the inference processing may be implemented by a reconfigurable logic circuit such as an FPGA. The CPU 201 may be responsible for the processing of the inference execution unit 210.

The network I/F 204 is an interface for connecting to the network 400, and is responsible for communication with an external device such as the camera 100 via a communication medium such as ETHERNET. For example, the communication with the camera 100 includes transmitting a control command to the camera 100, receiving a captured image from the camera 100, and the like.

A display unit 205 is a display unit having a screen such as a liquid crystal screen or a touch panel screen, and displays a captured image and a detection result, which are received from the camera 100, a setting screen for the controller 200, and the like. In the present embodiment, it is assumed that the display unit 205 has a touch panel screen. The controller 200 may not include the display unit 205, and for example, a display device may be connected to the controller 200, and the captured image, the detection result, the setting screen for the controller 200, and the like may be displayed on the display device.

A user input I/F 206 is an interface for receiving an operation from the user on the controller 200, and includes, for example, a button, a dial, a joystick, a touch panel, and the like.

The storage device of the controller 200 is a non-volatile storage device such as a flash memory, an HDD, an SSD, or an SD card. The storage device stores computer programs and data for causing the CPU 201 and the inference execution unit 210 to execute or control various types of processing that will be described as processing to be performed by an OS and the controller 200. The storage device is also used as a temporary storage area for various types of data.

The CPU 201, the RAM 202, the ROM 203, the inference execution unit 210, the storage device, the network I/F 204, the display unit 205, and the user input I/F 206 are each connected to a system bus 207. The controller 200 may be a personal computer (PC) including a mouse, a keyboard, and the like as the user input I/F 206.

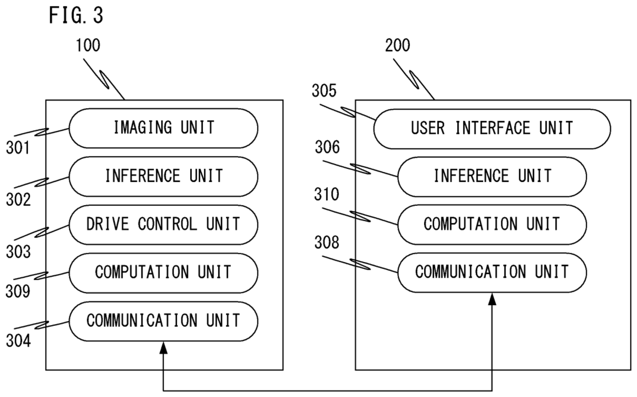

Next, processing units implemented by the camera 100 and the controller 200 will be described with reference to a block diagram of FIG. 3. In FIG. 3, general-purpose software such as an operating system is omitted from the illustration.

The ROM 103 of the camera 100 stores pieces of software for implementing an imaging unit 301, an inference unit 302, a drive control unit 303, a communication unit 304, and a computation unit 309. The CPU 101 loads these pieces of software from the ROM 103 into the RAM 102 as appropriate and uses them. The ROM 103 is a storage medium that stores programs for causing the camera 100 to function as respective means for executing processing that will be described below.

The imaging unit 301 has a software function for acquiring a captured image including a subject by causing the CPU 101 to control the image processing unit 106. The inference unit 302 has a software function for detecting a subject from a captured image and a software function for extracting an appearance feature amount of a subject included in a captured image, by causing the CPU 101 to control the inference execution unit 110.

The drive control unit 303 has a software function for causing the CPU 101 to control the drive unit 109 to rotate the camera 100 such that the front of the camera 100 faces the subject. The communication unit 304 has a software function for causing the CPU 101 to perform data communication with the controller 200.

The computation unit 309 has software functions for causing the CPU 101 to perform various types of computation processing such as motion prediction processing, arithmetic operations associated with control command calculation, and logical operations for branch processing.

The storage device of the controller 200 stores pieces of software for implementing a user interface unit 305, an inference unit 306, a communication unit 308, and a computation unit 310. The CPU 201 loads these pieces of software from the storage device into the RAM 202 as appropriate and uses them.

The user interface unit 305 has software functions for displaying information required by the user and receiving user operations, by causing the CPU 201 to control the display unit 205 and the user input I/F 206.

The inference unit 306 has a software function for detecting a subject from a captured image received from the camera 100 and a software function for extracting an appearance feature amount of a subject included in a captured image, by causing the CPU 201 to control the inference execution unit 210. The communication unit 308 has a software function for causing the CPU 201 to perform data communication with the camera 100.

The computation unit 310 has software functions for causing the CPU 201 to perform various types of computation processing such as motion prediction processing, arithmetic operations associated with control command calculation, and logical operations for branch processing.

The software configuration illustrated in FIG. 3 is an example, and for example, one functional unit may be divided into a plurality of functional units by functions, or a plurality of functional units may be integrated into one functional unit. One or more of the functional units illustrated in FIG. 3 may be implemented by hardware.

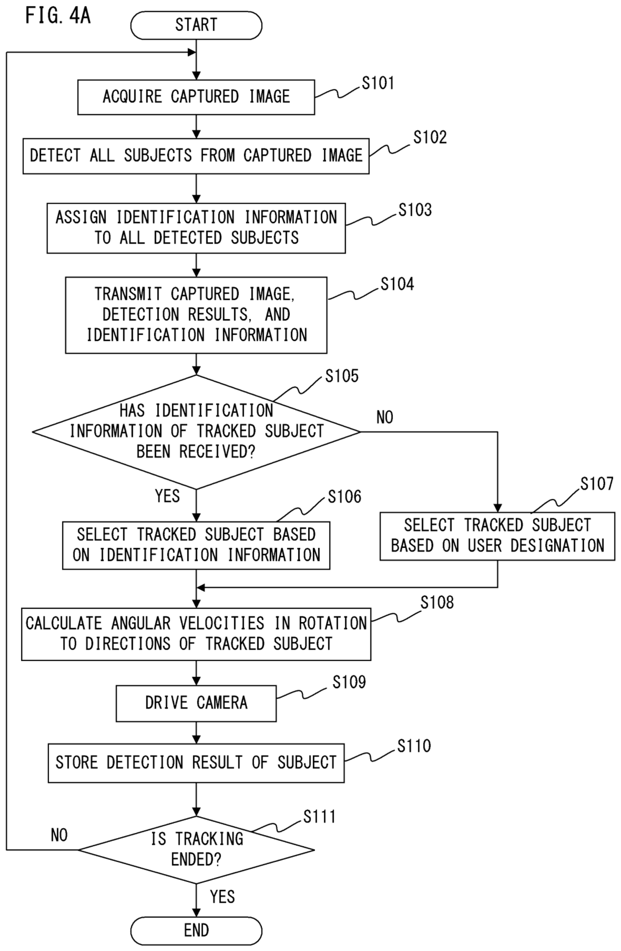

(Operations of Each Device) Next, the operations of the camera 100 and the controller 200 in the system according to the present embodiment will be described. First, the operation of the camera 100 will be described with reference to a flowchart in FIG. 4A. The CPU 101 reads out pieces of software for implementing their corresponding units, which will be described below, from the ROM 103, loads them into the RAM 102, and executes their respective types of processing.

In step S101, the CPU 101 executes the imaging unit 301 to acquire a captured image from the image processing unit 106 and stores the acquired captured image in the RAM 102.

In step S102, the CPU 101 executes the inference unit 302 to input the captured image stored in the RAM 102 in step S101 into the inference execution unit 110. The CPU 101 then controls the inference execution unit 110 to detect all subjects in the captured image, and stores the detection results of the subjects in the RAM 102.

At this time, the inference execution unit 110 reads out a learned model created using machine learning such as deep learning from the ROM 103, and loads the learned model into the RAM 102. The inference execution unit 110 then inputs the captured image into the learned model and performs computation processing on the learned model to detect the subjects in the captured image, and outputs the detection results including attribute information such as position information, size information, and orientation information of the subjects. The CPU 101 may reduce the size of the captured image, and the inference execution unit 110 may input the reduced captured image into the learned model. This reduces the amount of processing required by the inference execution unit 110, making it possible to speed up the inference processing.

A detection result of a subject by the inference execution unit 110 will now be described. When the inference execution unit 110 inputs a captured image to a learned model, the learned model outputs rectangle information that defines a rectangle including as position information of the subject the entire subject in the captured image (e.g., the coordinates of the top left and bottom right vertices of the rectangle). The rectangle information is not limited to on the entire subject, but may be information indicating a part of the subject, for example, the position of the head or face of a human subject. In this case, the learned model to be used is changed to another learned model having desired input and output. The position information of the subject is not limited to the coordinates of the top left and bottom right vertices of a rectangle including the entire subject, but may be any information indicating the position of the subject in the captured image, such as the center coordinates, width, and height of the rectangle. The inference execution unit 110 outputs, as the orientation information of the subject, one of four directions: front, right, back, and left. The orientation of the subject is not limited to such discontinuous directions, but may be a continuous angle such as 0 degrees or 90 degrees.

The method by which the inference execution unit 110 detects a subject from a captured image is not limited to a specific method. For example, the inference execution unit 110 may use a template matching method in which a template image of a subject is registered in advance and a region in the captured image that has a high similarity to the template image is detected as the region of the subject.

In step S103, the CPU 101 executes the computation unit 309 to identify an identical subject based on motion prediction using the detection results (past detection results) stored in the RAM 102 and the appearance feature amounts of the captured images within the respective regions of detection results. Of the subjects detected from the captured image of the current frame (present frame), the CPU 101 then assigns, to a subject that is identical to a previous subject detected from the captured image of a previous frame, the same identification information as the identification information of the previous subject. The CPU 101 stores in the RAM 102 the identification information assigned to the subject detected from the captured image of the current frame. The processing of step S103 will be described later in detail.

In step S104, the CPU 101 executes the communication unit 304 to read out a captured image, detection results, and identification information from the RAM 102 and transmit the read captured image, detection results, and identification information to the controller 200 via the network I/F 105. In the present embodiment, when the detection results and the captured image are not synchronized due to the execution time of the inference processing, the CPU 101 transmits the previous detection results as the current detection results.

In step S105, the CPU 101 executes the computation unit 309 to determine whether or not the identification information of the tracked subject has been received from the controller 200 via the network I/F 105. If the CPU 101 has received the identification information (S105: YES), the processing proceeds to step S106. If the CPU 101 has not received the identification information (S105: NO), the processing proceeds to step S107.

In step S106, the CPU 101 executes the computation unit 309 to select, based on the detection results and the identification information of the subjects stored in the RAM 102, a tracked subject, and stores the identification information of the selected tracked subject in the RAM 102.

In step S107, the CPU 101 executes the computation unit 309 to receive via the network I/F 105 the identification information of the tracked subject designated by the user operating the controller 200, and stores the received identification information in the RAM 102.

In step S108, the CPU 101 executes the computation unit 309. The CPU 101 then reads out, from the RAM 102, "position information of the tracked subject in the captured image of the current frame (the subject corresponding to the identification information stored in the RAM 102 in step S106 or step S107)". The CPU 101 also reads out "position information of the tracked subject in the target imaging composition". The CPU 101 then uses the read position information to compute a difference between the respective pieces of position information in the captured image of the current frame. The CPU 101 then converts the computed difference into an angle difference as seen from the camera 100. For example, the CPU 101 approximately calculates the angle per pixel of the captured image using information on the imaging resolution and imaging angle of view of the camera 100, and multiplies the calculated angle by the computed difference to obtain an angle difference. The CPU 101 then calculates angular velocities in the pan and tilt directions according to the calculated angle difference. For example, let A_1 be the angle of the tracked subject in the current frame, A_2 be the angle of the tracked subject in the target imaging composition, and G be a velocity coefficient. In this case, the CPU 101 calculates an angular velocity $\Omega$ using the following Equation 1.

$$\Omega = (A\_2 - A\_1) \times G \quad \text{(Equation 1)}$$

The value of the velocity coefficient may be determined experimentally, or the user may designate a value through an operation on the controller 200. The method of calculating the angular velocities in the pan and tilt directions is not limited to the above calculation method. The angular velocities may be calculated, for example, such that the pan angular velocity increases as the difference in the horizontal direction is larger, and the tilt angular velocity increases as the difference in the vertical direction is larger. In this step, the CPU 101 stores the information on the calculated angular velocities in the pan and tilt directions in the RAM 102.

In step S109, the CPU 101 executes the drive control unit 303 to derive drive parameters for panning and tilting the camera 100 in a desired direction and at a desired velocity from the angular velocities in the pan and tilt directions read from the RAM 102. Here, the drive parameters are control values for controlling motors (not illustrated) for pan and tilt directions included in the drive unit 109. The CPU 101 then controls the drive unit 109 via the drive I/F 108 based on the derived drive parameters. The drive unit 109 rotates based on the drive parameters, to change the imaging direction of the camera 100, that is, perform pan and tilt operations.

In step S110, the CPU 101 executes the computation unit 309 and stores in the RAM 102 the position information of the subject in the captured image of the current frame to be used as the position information of the subject in previous frames in subsequent processing.

In the present embodiment, it is assumed that the detection results for the previous two frames are referenced in the motion prediction processing. Therefore, the RAM 102 is assumed to hold at least the detection results for the previous two frames. The number of previous frames to be referenced is not limited to two, and any number of previous frames may be used for motion prediction.

In step S111, the CPU 101 executes the computation unit 309 to determine whether or not an end condition for ending the tracking is satisfied. The end condition can include various conditions and are not limited to a specific condition. Examples of the end condition include "a tracking end instruction has been received from the controller 200", "the current date and time has reached a specified date and time", and "a specified time has elapsed since tracking starts". If the CPU 101 determines that an end condition is satisfied (S111: YES), then the processing of the flowchart in FIG. 4A ends. On the other hand, if the CPU 101 determines that any end condition is not satisfied (S111: NO), the processing returns to step S101.

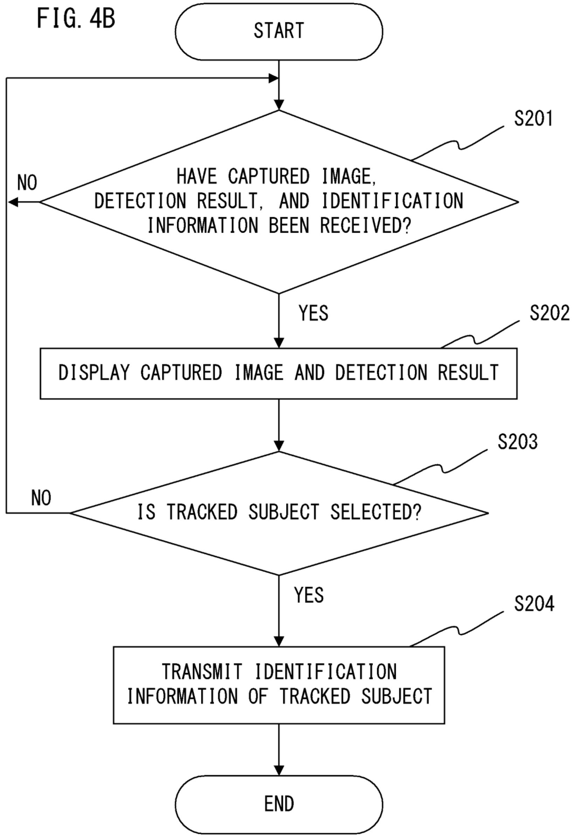

Next, the processing executed by the controller 200 to transmit identification information of a tracked subject to the camera 100 will be described with reference to a flowchart of FIG. 4B. The CPU 201 reads out pieces of software for implementing their corresponding units, which will be described below, from the ROM 203, loads them into the RAM 202, and executes their respective types of processing.

In step S201, the CPU 201 executes the computation unit 310 to determine whether or not a captured image, a detection result, and identification information have been received from the camera 100 via the network I/F 204. If the CPU 201 has received a captured image, a detection result, and identification information from the camera 100 (S201: YES), the CPU 201 stores the received captured image, detection result, and identification information in the RAM 202, and then the processing proceeds to step S202. On the other hand, if the CPU 201 has not received a captured image, a detection result, and identification information from the camera 100 (S201: NO), the CPU 201 repeats the processing of step S201.

In step S202, the CPU 201 executes the user interface unit 305 to read out the captured image and the detection result from the RAM 202 and display the read captured image and detection result on the display unit 205.

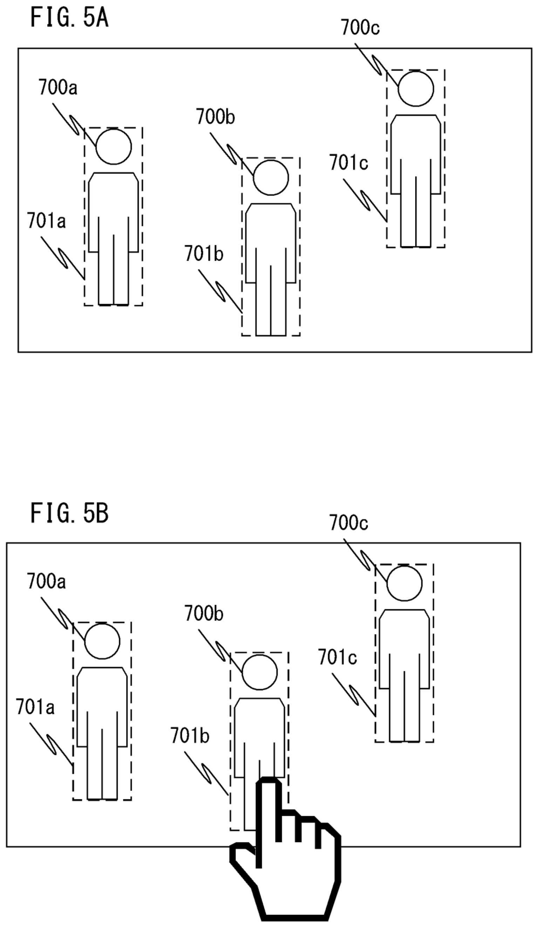

FIG. 5A illustrates a display example of a captured image and detection results on the display unit 205 in step S202. As illustrated in FIG. 5A, the captured image including three subjects 700a, 700b, and 700c is displayed on a display screen of the display unit 205. The captured image displayed also includes rectangular frames 701a, 701b, and 701c defined as the detection results of the subjects 700a, 700b, and 700c by pieces of rectangular information of the subjects 700a, 700b, and 700c, respectively. The user can check the captured image and detection results generated by the camera 100 on the screen of the display unit 205 illustrated in FIG. 5A.

In step S203, the CPU 201 executes the user interface unit 305 to receive a touch operation on the display unit 205 by the user for "an operation for selecting a tracked subject". FIG. 5B illustrates a state in which the user has selected the subject 700b in the center of the image as a tracked subject in the display example of FIG. 5A. In FIG. 5B, the user touches the screen with a finger to select the subject 700b as the tracked subject. The method for selecting the tracked subject is not limited to a specific method. For example, the user is allowed to operate the user input I/F 206 to select the subject 700b as the tracked subject.

The CPU 201 then determines whether or not a touch operation for "an operation for selecting a tracked subject" has been received. If the CPU 201 determines that a touch operation for "an operation for selecting a tracked subject" has been received (S203: YES), the processing proceeds to step S204. On the other hand, if the CPU 201 determines that a touch operation for "an operation for selecting a tracked subject" has not been received (S203: NO), the processing returns to step S201.

In step S204, the CPU 201 executes the communication unit 308 to read out the piece of identification information of the subject selected by the user as the tracked subject from the pieces of identification information stored in the RAM 202. The CPU 201 then transmits the read identification information to the camera 100 via the network I/F 204.

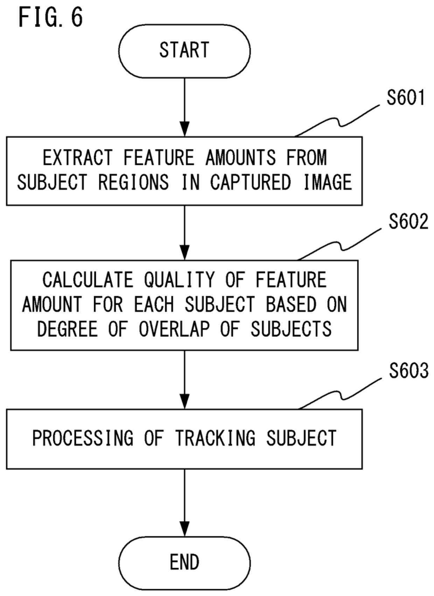

Next, details of the processing of step S103 will be described with reference to a flowchart of FIG. 6.

In step S601, the CPU 101 executes the inference unit 302 to execute a subject re-identification task. The subject re-identification task in the present embodiment involves, when images of an identical subject have been captured using a plurality of imaging devices in different imaging positions or directions, acquiring, as an appearance feature, a numerical vector for identifying the identical subject using the captured images.

Specifically, the CPU 101 reads out detection results DBOX of all subjects in the captured image from the RAM 102, and acquires appearance feature amounts DSTAT from regions corresponding to the detection results DBOX for the captured image. Here, the detection result of the i-th subject (i is a positive integer) in the captured image is defined as DBOX_i, and the appearance feature amount of the image corresponding to DBOX_i is defined as DSTAT_i. For the i-th detected subject, DBOX_i and DSTAT_i are associated with detected subject information OBJ_INFO_i. The CPU 101 stores the associated pieces of information in the RAM 102. After the CPU 101 stores the detected subject information for all detected subjects in the RAM 102, the processing proceeds to step S602.

In step S602, the CPU 101 calculates a quality of feature amount QUAL (a value indicating the quality of feature amount) for each piece of detected subject information OBJ_INFO, and stores the calculated quality of feature amount QUAL in the RAM 102 in association with the OBJ_INFO. The i-th detected subject information OBJ_INFO_i stored in the RAM 102 in this step is information in which the detection result DBOX_i, the appearance feature amount DSTAT_i, and the quality of feature amount QUAL_i are associated with each other. After the CPU 101 stores the associated pieces of information in the RAM 102, then the processing proceeds to step S603.

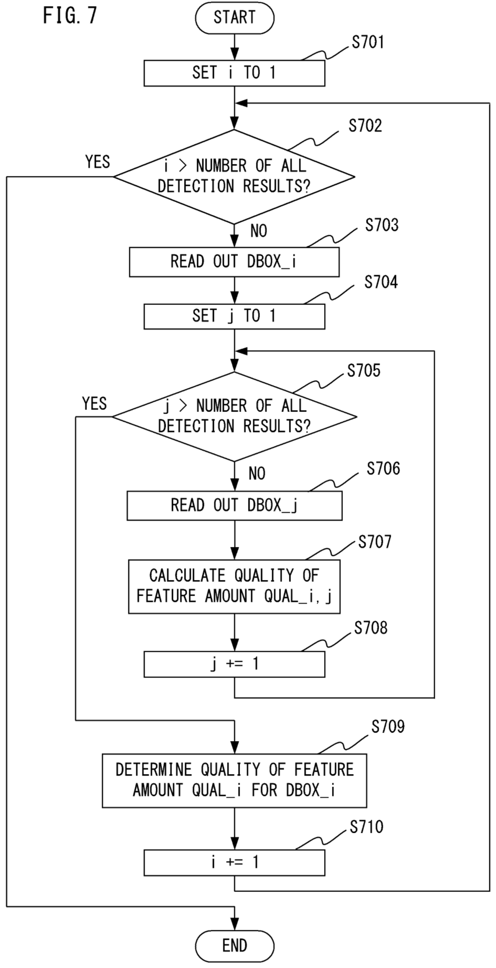

Here, a method for calculating the quality of feature amount QUAL_i of the i-th detected subject included in the captured image will be described with reference to FIG. 7. The CPU 101 executes the following processing to predict the quality of feature amount QUAL_i for each subject based on the degree of overlap of subjects in the captured image.

First, in step S701, the CPU 101 sets index i to 1 (i = 1) and stores it in the RAM 102 in order to select the first detection result DBOX as the target for calculating the quality of feature amount QUAL_i.

Next, in step S702, the CPU 101 reads out index i from the RAM 102 and determines whether or not index i is greater than the total number of detection results included in the most recent captured image. If index i is greater than the total number of detection results (S702: YES), the CPU 101 determines that calculation of the quality of feature amount QUAL_i for all detection results has been completed, and then the calculation processing for the qualities of feature amounts QUAL_i ends. On the other hand, if index i is equal to or less than the total number of detection results (S702: NO), the CPU 101 determines that there is a subject for which calculation of the quality of feature amount QUAL_i has not been performed, and then the processing proceeds to step S703.

Next, in step S703, the CPU 101 reads out the detection result DBOX_i of the detected subject information OBJ_INFO_i of the i-th detected subject from the RAM 102 as a target for calculating the quality of feature amount QUAL_i. In the present embodiment, the CPU 101 calculates the degree of overlap and area of DBOX_i and DBOX_j in the process of calculating the quality of feature amount QUAL_i,j to which other detection results DBOX_j (i ≠ j) contribute to the detection result DBOX_i. The CPU 101 then acquires the detection result DBOX_i as four image coordinate values, that is, the coordinates (DTOP_i, DLEFT_i) of the top left vertex and the coordinates (DBOTTOM_i, DRIGHT_i) of the bottom right vertex in plane coordinates set in the image, and stores the detection result DBOX_i in the RAM 102.

Next, in step S704, to calculate the quality of feature amount QUAL_i, the CPU 101 initializes index j for calculating the quality of feature amount QUAL_i,j to which the other detection result DBOX_j contributes to the detection result DBOX_i. In the present embodiment, the CPU 101 sets index j for calculating the quality of feature amount QUAL_i,j to 1 (j = 1), and stores index j in the RAM 102.

Next, in step S705, the CPU 101 reads index j from RAM 102 and determines whether or not index j is greater than the total number of detection results included in the most recent captured image. If index j is greater than the total number of detection results (S705: YES), the CPU 101 determines that calculation of the quality of feature amount QUAL_i,j for all detection results DBOX has been completed for the detection result DBOX_i, and then the processing proceeds to step S709. On the other hand, if index j is equal to or less than the total number of detection results (S705: NO), the CPU 101 determines that calculation of the quality of feature amount QUAL_i,j for all detection results DBOX has not been completed, and then the processing proceeds to step S706.

Next, in step S706, the CPU 101 reads out the detection result DBOX_j, for which the quality of feature amount QUAL_i,j is to be calculated for the detection result DBOX_i, from the RAM 102. In the present embodiment, as described in step S703, the CPU 101 acquires the detection result DBOX_j as four image coordinate values of the top left vertex (DTOP_j, DLEFT_j) and bottom right vertex (DBOTTOM_j, DRIGHT_j), and stores the detection result DBOX_j in the RAM 102.

Next, in step S707, the CPU 101 calculates the quality of feature amount QUAL_i,j based on the detection result DBOX_i and the detection result DBOX_j read from the RAM 102, and stores the calculated quality of feature amount QUAL_i,j in the RAM 102.

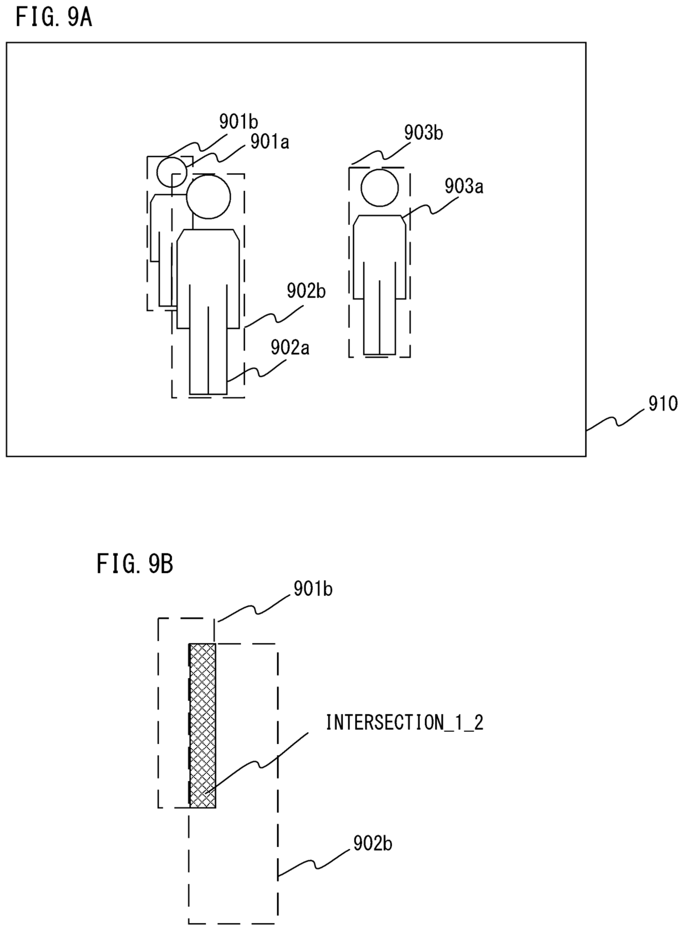

Details of the processing of calculating the quality of feature amount QUAL_i,j by the CPU 101 will now be described with reference to FIGS. 9A and 9B. FIG. 9A is a diagram illustrating an example of a captured image and detection results of subjects detected by the CPU 101 in step S102. In FIG. 9A, three subjects, a subject 901a, a subject 902a, and a subject 903a, are depicted in a captured image 910. In FIG. 9A, the positions of the subjects 901a, 902a, and 903a detected by the CPU 101 in step S102 are indicated as detected positions 901b, 902b, and 903b, respectively. In the following description, the first digit of the subscript will be used as an index for referencing a detection result. For example, a detection result DBOX_1 corresponds to the detection position 901b in the captured image 910. Similarly, detection results DBOX_2 and DBOX_3 correspond to the detection positions 902b and 903b in the captured image 910, respectively.

Details of specific calculation will be described with reference to FIG. 9B as an example of the quality of feature amount QUAL_1,2 in which the subject 902a calculated for index i of 1 and index j of 2 contributes to the subject 901a.

First, the CPU 101 reads out the detection result DBOX_1 of the subject 901a from the RAM 102 as (DTOP_1, DLEFT_1) and (DBOTTOM_1, DRIGHT_1), and calculates the area SDBOX_1 of DBOX_1. The CPU 101 calculates SDBOX_1 using the following Equation 2.

$$SDBOX\_1 = (DBOTTOM\_1 - DTOP\_1) \times (DRIGHT\_1 - DLEFT\_1) \quad \text{(Equation 2)}$$

Next, the CPU 101 reads out the detection result DBOX_2 of the subject 902a from the RAM 102 as (DTOP_2, DLEFT_2) and (DBOTTOM_2, DRIGHT_2). Then, the CPU 101 calculates the area of an overlapping region INTERSECTION_1_2 that overlaps with the detection result DBOX_1 using the following Equation 3.

$$INTERSECTION\_1\_2 = MAX(0, (DBOTTOM\_1 - DTOP\_2) \times (DRIGHT\_1 - DLEFT\_2)) \qquad \text{(Equation 3)}$$

Finally, the CPU 101 calculates the quality of feature amount QUAL_1,2 in which the detection result DBOX_2 contributes to the detection result DBOX_1 using the following Equation 4. Thus, the CPU 101 uses as the quality of feature amount of a first subject a value obtained by dividing the area of a region where the first subject and a second subject overlap in a captured image by the area of a region of the first subject in the captured image. The quality of feature amount calculated here is an example of an index that indicates the degree of overlap between a tracked subject, which is to be tracked, and another subject.

$$QUAL\_1,2 = INTERSECTION\_1\_2/SDBOX\_1 \quad \text{(Equation 4)}$$

After the CPU 101 calculates QUAL_i,j and stores it in the RAM 102, the processing proceeds to step S708.

Next, in step S708, the CPU 101 adds 1 to the current index j to calculate the quality of feature amount QUAL_i,j for the detection result DBOX_j that follows the detection result DBOX_i. After the CPU 101 performs the processing of step S708, the processing returns to step S705.

In step S709, the CPU 101 calculates the final quality of feature amount QUAL_i for the detection result DBOX_i and stores it in the RAM 102. In the present embodiment, the CPU 101 reads out all the qualities of feature amounts QUAL_i,j related to the detection result DBOX_i, and determines the minimum value of the read qualities of feature amounts as the final quality of feature amount QUAL_i. The CPU 101 stores the determined final quality of feature amount QUAL_i in the RAM 102.

The meaning of the value of the final quality of feature amount QUAL_i determined in step S709 will now be described with reference to FIG. 9B. For the sake of convenience, the detection result DBOX_i will be described here using only the detection results DBOX_1 and DBOX_2 related to the subject 901a and the subject 902a.

The area relationship between the detection result DBOX_1 and the detection result DBOX_2 is SDBOX_1 < SDBOX_2, as illustrated in FIG. 9B. The value of the overlapping region INTERSECTION_1_2 between the detection result DBOX_1 and the detection result DBOX_2 remains unchanged. Accordingly, the quality of feature amount QUAL_i calculated by Equation 4 has the opposite magnitude relationship to the area, resulting in the quality of feature amount QUAL_1 > the quality of feature amount QUAL_2.

Since the value of the overlapping region INTERSECTION_1_2 is at most the area SBOX_1 of the detection result DBOX_1, the quality of feature amount QUAL_i takes a value at least 0 and not more than 1, inclusive, and the closer to 1 it is, the larger the overlapping region with the other detection result DBOX_j is. Furthermore, for example, it is now assumed that a captured image has been acquired in which two people of similar heights overlapping appear. In this case, considering the depth direction as seen from the camera 100, the contribution of the detection result DBOX_j of the farther subject (the j-th detected subject) to the overlapping region is small relative to the detection result DBOX_i of the nearer subject (the i-th detected subject) as seen from the camera 100. Therefore, a detection result DBOX_i having a large value for the quality of feature amount QUAL_i is likely to be a detection result related to a subject located further back than the other subject as seen from the camera 100.

Next, in step S710, the CPU 101 adds 1 to index i to change the target for determining the quality of feature amount QUAL_i to the next detection result DBOX_i. After the CPU 101 stores, in the RAM 102, index i thus added, the processing returns to step S702.

Through the above processing, the CPU 101 can calculate the quality of feature amount QUAL_i for each detection result DBOX_i in the current frame. In the above processing, the CPU 101 predicts the quality of feature amount based on the area of each subject in the captured image, but the CPU 101 may also predict the quality of feature amount based on the width or height of each subject instead of or in addition to the area of the subject.

Next, in step S603, the CPU 101 tracks a tracked subject selected to be tracked from among the plurality of subjects based on the position and feature amount of each subject. Specifically, the CPU 101 assigns the same identifier to an identical subject in captured images with imaging times based on the detected subject information OBJ_INFO and the quality of feature amount QUAL, which are obtained by the above processing. The CPU 101 associates tracked subject information TRACK_INFO in the previously captured image with the detected subject information OBJ_INFO, and updates the tracked subject information TRACK_INFO. After the CPU 101 assigns an identifier ID to the tracked subject information TRACK_INFO and stores it in the RAM 102, the processing proceeds to step S105.

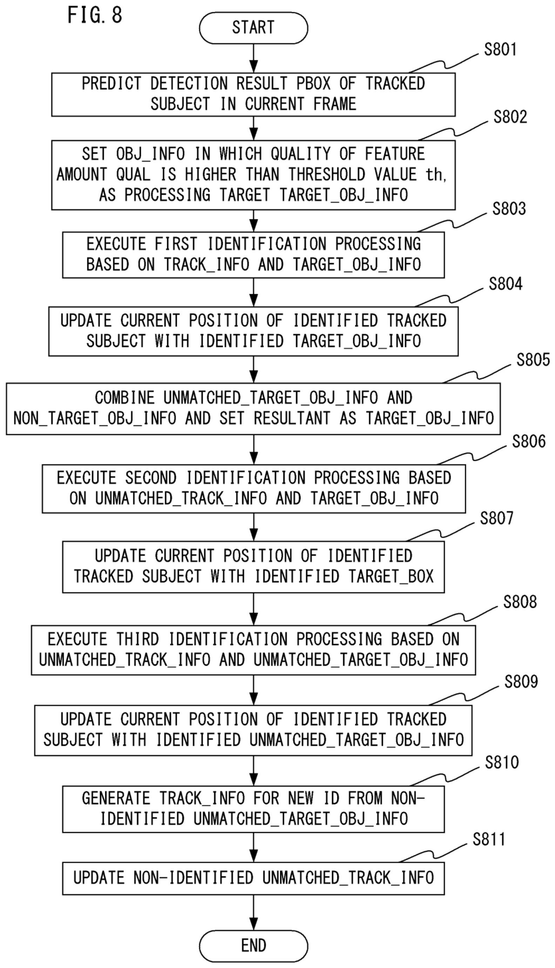

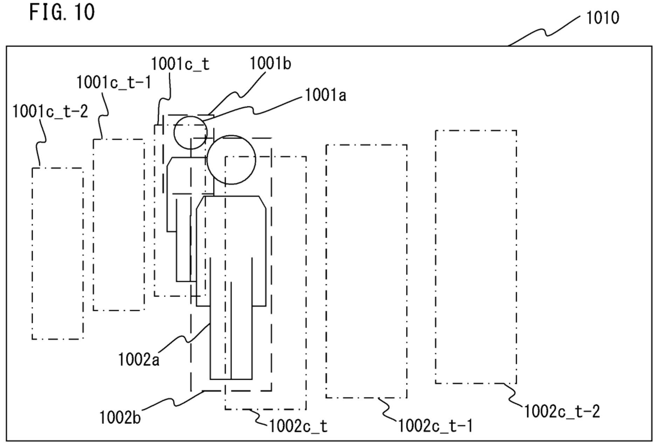

Subject tracking processing executed by the CPU 101 in step S603 will now be described with reference to FIGS. 8 and 10. FIG. 8 is a flowchart of the subject tracking processing executed by the CPU 101. FIG. 10 is a diagram illustrating an example of the subject tracking processing executed by the CPU 101. FIG. 10 illustrates subjects 1001a and 1002a depicted in a captured image 1010. FIG. 10 also illustrates a frame 1001b that indicates a detection result of the subject 1001a, and a frame 1002b that indicates a detection result of the subject 1002a.

FIG. 10 also illustrates a frame 1001c resulting from tracking and predicting the subject 1001a with an identifier ID of 1. For example, a frame 1001c_t-2 and a frame 1001c_t-1 are frames that indicate the detection results of the subject 1001a tracked in the previous two frames. A frame 1001c_t is a prediction result that indicates a predicted position of the subject 1001a in the current captured image 1010.

FIG. 10 also illustrates a frame 1002c_t resulting from tracking and predicting the subject 1002a with an identifier ID of 2. For example, a frame 1002c_t-2 and a frame 1002c_t-1 are frames that indicate the detection results of the subject 1002a in the previous two frames, and a frame 1002c_t is a predicted position of the subject 1002a in the current captured image 1010. Details of the prediction processing for the subjects 1001a and 1002a will be described later.

In step S801, the CPU 101 reads out the tracked subject information TRACK_INFO for a previous captured image from the RAM 102, and predicts the position of the tracked subject in the current captured image based on the tracked subject information TRACK_INFO. In the present embodiment, the tracked subject information TRACK_INFO is made up of an identifier ID_i, the previous two detection results TBOX_i_t-1 and TBOX_i_t-2, and the previous one subject appearance feature amount TSTAT_i_t-1.

For all pieces of TRACK_INFO, the CPU 101 predicts a detection result PBOX_i_t in the captured image 1010 based on the detection results TBOX_i_t-1 and TBOX_i_t-2. In the present embodiment, the CPU 101 predicts the detection result PBOX_i_t at the current time (time t) on the assumption that the central X coordinate, Y coordinate, aspect ratio, and height of the detection result TBOX from time t-2 to time t-1 change linearly.

The CPU 101 determines a detection result BOX_i_t for all pieces of tracked object information TRACK_INFO, stores the detection result BOX_i_t in association with the tracked object information TRACK_INFO in the RAM 102, and then the processing proceeds to step S802.

Next, in step S802, the CPU 101 reads out the detected object information OBJ_INFO from the RAM 102. The CPU 101 then extracts OBJ_INFO in which the quality of feature amount QUAL is higher than a threshold value th, and sets the extracted OBJ_INFO as processing target TARGET_OBJ_INFO.

Here, the threshold value th is a predetermined value, and in the present embodiment, it is set to 0.4 as an example, but the value of the threshold value th is not limited to this, and may be adaptively changed depending on the information included in OBJ_INFO. The threshold value th is not limited to a fixed value, and may be changed between 0 and 1 depending on the proportion of the area of the detection result DBOX_i in the captured image 1010 for each subject, for example.

The CPU 101 also sets, as non-processing target NON_TARGET_OBJ_INFO, OBJ_INFO that has not been selected as the processing target TARGET_OBJ_INFO. After the CPU 101 stores the processing target TARGET_OBJ_INFO and the non-processing target NON_TARGET_OBJ_INFO in the RAM 102, the processing proceeds to step S803.

Next, in step S803, the CPU 101 reads out TRACK_INFO and TARGET_OBJ_INFO from the RAM 102, and executes first identification processing. In the first identification processing, when the degree of overlap between the tracked subject and the other subject is a first value, the CPU 101 associates one of the plurality of detected subjects with the tracked subject using their similarities of feature amount. Here, the first value means a value higher than the above-mentioned threshold value th. The first identification processing is first association processing of subjects in a captured image. Specifically, the CPU 101 acquires an appearance feature amount TSTAT_i_t-1 included in the TRACK_INFO and an appearance feature amount DSTAT_j included in the TARGET_OBJ_INFO, and calculates an appearance cost matrix R using the acquired appearance feature amounts.

Here, when the number of tracked subjects included in TRACK_INFO is N and the number of detected subjects included in the processing target TARGET_OBJ_INFO is M, the size of the appearance cost matrix R is N × M. The value in the i-th row and j-th column of the appearance cost matrix R indicates a similarity between the i-th tracked object in TRACK_INFO and the j-th detected object in TARGET_OBJ_INFO. In the present embodiment, each value included in the appearance cost matrix R is a cosine distance calculated from the appearance feature amount TSTAT_i_t-1 and the appearance feature amount DSTAT_j. The value in the i-th row and j-th column of the appearance cost matrix R is calculated using the following Equation 5.

$$R\_i,j = 1 - \cos(\mathrm{TSTAT\_i\_t\text{-}1}, \mathrm{DSTAT\_j}) \quad (\mathrm{Equation\ 5})$$

The CPU 101 solves an optimal allocation problem for the calculated appearance cost matrix R to determine a pair of TRACK_INFO and TARGET_OBJ_INFO in which their appearance features are similar to each other. As used herein, the optimal allocation means determining a combination having the lowest cost in a state where only one piece of TARGET_OBJ_INFO is allocated to each piece of TRACK_INFO. In the present embodiment, it is assumed that the CPU 101 solves the optimal allocation problem for the appearance cost matrix R based on the Hungarian algorithm, but the method for solving the optimal allocation problem is not limited to this algorithm. For example, the CPU 101 may employ a method of allocating TARGET_OBJ_INFO with the smallest cost in the appearance cost matrix R in ascending order of the index of TRACK_INFO.

The CPU 101 may filter the appearance cost matrix R to obtain elements having costs equal to or less than a predetermined threshold value in advance, and then solve the optimal allocation problem. This allows the CPU 101 to avoid erroneous recognition of allocating another detected subject to the tracked subject when, for example, the number N of tracked subjects is greater than the number M of detected subjects and there is no detected subject corresponding to the tracked subject.

As a result of solving the optimal allocation problem, the CPU 101 stores a pair of TRACK_INFO and TARGET_OBJ_INFO as PAIR_INFO in the RAM 102. The CPU 101 also sets TARGET_OBJ_INFO for which no pairing has been made as UNMATCHED_TARGET_OBJ_INFO. The CPU 101 also sets TRACK_INFO for which no pairing has been made as UNMATCHED_TRACK_INFO. The CPU 101 then stores UNMATCHED_TARGET_OBJ_INFO and UNMATCHED TRACK_INFO in the RAM 102.

Next, in step S804, the CPU 101 reads out PAIR_INFO from the RAM 102 and updates each piece of TRACK_INFO with TARGET_OBJ_INFO to be paired with it.

Specifically, the CPU 101 sets the detection result TBOX_i_t of the i-th TRACK_INFO from the read PAIR_INFO as the detection result DBOX_j included in the j-th TARGET_OBJ_INFO paired in step S803. As a result, when the processing of this flowchart is executed for the next captured image, it can be expected in step S801 that the accuracy of predicting the position of the tracked subject on the next captured image will be improved.

Furthermore, in the present embodiment, the CPU 101 not only sets the detection result TBOX_i_t included in TRACK_INFO, but also updates the appearance feature amount TSTAT_i_t based on DSTAT_j included in TARGET_OBJ_INFO. The CPU 101 updates the appearance feature amount TSTAT_i_t using the following Equation 6. A included in Equation 6 is a value set between 0 and 1, and indicates the rate of updating the appearance feature amount. In the present embodiment, as an example, A is an experimentally determined value, and the value is set to 0.9.

$$\mathrm{TSTAT\_i\_t} = A \times \mathrm{TSTAT\_\textbf{i}\_t\text{-}1} + (1 - A) \times \mathrm{DSTAT\_j} \quad (\text{Equation 6})$$

After the CPU 101 has completed updating all pieces of TRACK_INFO included in PAIR_INFO, the processing proceeds to step S805.

Next, in step S805, the CPU 101 sets TARGET_OBJ_INFO as a new target for solving the optimum allocation problem. Specifically, the CPU 101 reads out NON_TARGET_OBJ_INFO and UNMATCHED_TARGET_OBJ_INFO from the RAM 102, combines them, sets the resultant as TARGET_OBJ_INFO, and stores the resultant in the RAM 102.

Next, in step S806, the CPU 101 reads out the processing target TARGET_OBJ_INFO and UNMATCHED_TRACK_INFO from the RAM 102, and executes second identification processing. Specifically, when the degree of overlap between the tracked subject and the other subject is a second value that indicates a value where the overlap is less than for the first value, the CPU 101 associates one of the plurality of detected subjects with the tracked subject using their similarities of position. The second identification processing is second association processing of subjects in a captured image.

Specifically, the CPU 101 calculates a distance cost matrix D related to distance from the predicted detection result PBOX_i_t included in UNMATCHEDTRACKINFO and the detection result DBOX_j included in TARGET _OBJ _INFO.

Here, when the number of tracked subjects included in UNMATCHED_TRACK_INFO is K and the number of detected subjects included in the processing target TARGET_OBJ_INFO is L, the size of the distance cost matrix D is K × L. The value in the k-th row and l-th column (k and l are positive integers) of the distance cost matrix D indicates a similarity between the k-th tracked subject in UNMATCHED_TRACK_INFO and the l-th detected subject in TARGET_OBJ_INFO.

In the present embodiment, the CPU 101 calculates, as a similarity of position, the distance between the center points of the upper sides of the predicted detection result PBOX_i_t and the detection result DBOX_j, using the following Equation 7.

$$\mathrm{D\_i,j} = |\mathrm{TC}(\mathrm{PBOX\_i\_t}) - \mathrm{TC}(\mathrm{DBOX\_j})| \quad (\text{Equation 7})$$

TC in Equation 7 represents a function that calculates the coordinates of the upper center point of the predicted detection result PBOX_i_t or the detection result DBOX_j. When the detection result is DBOX, TC(DBOX) is calculated by the following Equation 8.

$$TC(DBOX) = (DTOP, (DLEFT + DRIGHT)/2) \quad (Equation \ 8)$$

The CPU 101 solves an optimal allocation problem for the calculated distance cost matrix D to determine a pair of UNMATCHEDTRACKINFO and TARGET_OBJ_INFO based on the similarity of position. The optimal allocation problem executed here is the same as the optimal allocation problem executed in step S803, and therefore a detailed description thereof will be omitted.

The CPU 101 may filter the distance cost matrix D to obtain elements having costs equal to or less than a predetermined threshold value in advance, and then solve the optimal allocation problem. This allows the CPU 101 to avoid erroneous recognition of allocating another detected subject to the tracked subject when, for example, the number N of tracked subjects is greater than the number M of detected subjects and there is no detected subject corresponding to the tracked subject.

As a result of solving the optimal allocation problem, the CPU 101 sets a pair of UNMATCHED_TRACK_INFO and TARGET_OBJ_INFO as PAIR_INFO and stores it in the RAM 102. The CPU 101 also sets TARGET_OBJ_INFO for which no pairing has been made as UNMATCHED_TARGET_OBJ_INFO, and stores it in the RAM 102. The CPU 101 also stores UNMATCHED_TRACK_INFO for which no pairing has been made, in the RAM 102 as it is. Then in the CPU 101, the processing proceeds to step S807.

The effect of solving the optimal allocation problem based on the distance between the upper center points of the detection results of subjects in the present embodiment will be described with reference to FIG. 10. FIG. 10 illustrates a state in which the subject 1001a and the subject 1002a overlap in the captured image 1010 captured at time t. FIG. 10 also illustrates a case where the detection result of the subject 1001a, which is partially occluded on the far side as seen from the camera 100, is only the upper body of the subject 1001a, as indicated by the frame 1001b.

In the present embodiment, the CPU 101 acquires an appearance feature amount STAT_i for the frame 1001b indicating the detection result of the subject 1001a in the captured image 1010. However, the frame 1001b does not contain the lower half of the subject 1001a. The frame 1001b also overlaps a part of the subject 1002a. Therefore, depending on the clothing of the subject 1002a, for example, the appearance feature amount acquired by the CPU 101 for the frame 1001b may include the appearance feature amount of the subject 1002a. As a result, the CPU 101 is more likely to fail in the first identification processing using the frame 1001c_t indicating a predicted position of the subject 1001a with an identifier ID of 1 and the frame 1001b in the captured image 1010.

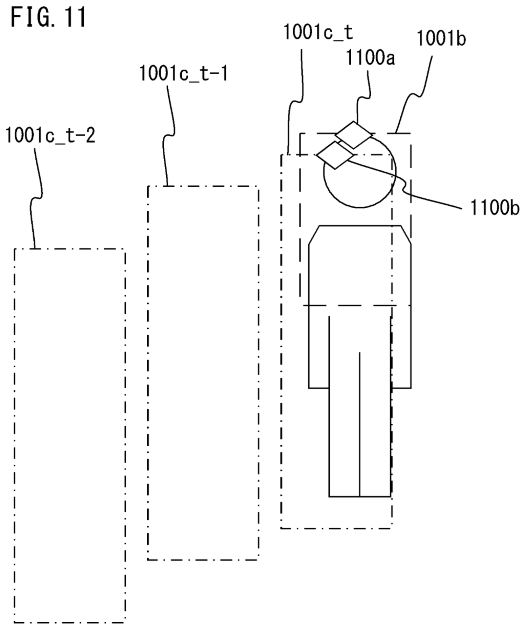

Next, FIG. 11 illustrates an example of a predicted position of the subject 1001a with an identifier ID of 1 in the captured image 1010 and the detection result of the subject 1001a. FIG. 11 illustrates an upper center point 1100a of the frame 1001c_t indicating the predicted position of the subject 1001a with an identifier ID of 1 in the current captured image 1010. FIG. 11 also illustrates an upper center point 1100b of the frame 1001b, which is the detection result of the subject 1001a in the captured image 1010.

As indicated by the center points 1100a and 1100b in FIG. 11, if it is the identical subject, the upper center points will be close to each other even when part of the subject is occluded by another subject or the like. Therefore, the CPU 101 executes the second identification processing based on the distance between the upper center points for a subject for which the quality of feature amount is determined to be low or a subject for which identification based on the appearance feature amount has failed, thereby achieving identification with higher accuracy. Accordingly, in the present embodiment, when the degree of overlap between the tracked subject and the other subject is a first value, the CPU 101 makes the contribution rate of the similarity of feature amount higher than the contribution rate of the similarity of position to execute the first identification processing. When the degree of overlap between the tracked subject and the other subject is a second value, the CPU 101 makes the contribution rate of the similarity of positional higher than the contribution rate of the similarity of feature amount to execute the second identification processing. Thus, the CPU 101 adaptively predicts the quality of feature amount of each subject depending on the degree of overlap between the subjects in the captured image, so that it is expected to achieve subject tracking with higher accuracy.

Next, in step S807, the CPU 101 reads out PAIR_INFO from the RAM 102, and updates the current position of TRACK_INFO with the detection result DBOX in the captured image. The update processing of this step is the same as the update processing of step S804, and therefore a detailed description thereof will be omitted.

After the CPU 101 has completed updating all pieces of TRACK_INFO included in PAIR_INFO and stored them in the RAM 102, the processing proceeds to step S808.

Next, in step S808, the CPU 101 reads out UNMATCHED_TARGET_OBJ_INFO and UNMATCHED_TRACK_INFO from the RAM 102, and executes third identification processing.

Specifically, the CPU 101 calculates an overlap cost matrix O based on the overlap of the detection results for UNMATCHED_TRACK_INFO and UNMATCHED_TARGET_OBJ_INFO. The CPU 101 then solves an optimal allocation problem for the calculated overlap cost matrix O. Here, when the number of tracked subjects included in UNMATCHED_TRACK_INFO is P and the number of detected subjects included in the processing target UNMATCHED_TARGET_OBJ_INFO is Q, the size of the overlap cost matrix O is P × Q. The value in the p-th row and q-th column (p and q are positive integers) of the overlap cost matrix O indicates a similarity based on the overlap between the p-th tracked subject in UNMATCHED_TRACK_INFO and the q-th detected subject in UNMATCHED_TARGET_OBJ_INFO.

In the present embodiment, the CPU 101 calculates a similarity based on the overlap between the tracked subject and the detected subject from Intersection over Union (IoU). The value of each element of the overlap cost matrix O is calculated by the following Equation 9. The method for calculating IoU is a common calculation method, and therefore a detailed description thereof will be omitted.

$$O\_p,q = 1 - IoU(PBOX\_p\_t, DBOX\_q) \quad (Equation\ 9)$$

Next, the CPU 101 solves the optimal allocation problem for the overlap cost matrix O to determine a pair of UNMATCHED_TRACK_INFO and UNMATCHED_TARGET_OBJ_INFO. The optimal allocation problem executed here is the same as the optimal allocation problem executed in step S803, and therefore a detailed description thereof will be omitted.

The CPU 101 stores a pair of UNMATCHED_TRACK_INFO and TARGET_OBJ_INFO obtained by solving the optimal allocation problem, in the RAM 102 as PAIR_INFO.

The CPU 101 also stores TARGET_OBJ_INFO for which no pairing has been made, in the RAM 102 as UNMATCHED_TARGET_OBJ_INFO. The CPU 101 also stores UNMATCHED_TRACK_INFO for which no pairing has been made, in the RAM 102 as it is. Then in the CPU 101, the processing proceeds to step S809.

Next, in step S809, the CPU 101 reads out PAIR_INFO from the RAM 102, and updates TRACK_INFO with the detection result BOX in the current captured image. The update processing of this step is the same as the update processing executed in step S804, and therefore a detailed description thereof will be omitted. After the CPU 101 has completed updating all pieces of TRACK_INFO included in PAIR_INFO and stored them in the RAM 102, the processing proceeds to step S810.

Next, in step S810, the CPU 101 reads out UNMATCHED_TARGET_OBJ_INFO from the RAM 102, and registers a subject corresponding to UNMATCHED_TARGET_OBJ_INFO as a tracked subject. Specifically, the CPU 101 acquires the identifier ID with the maximum value from all pieces of TRACK_INFO, and determines a value obtained by adding 1 to the acquired identifier ID as a new identifier NID. The CPU 101 then generates tracked subject information TRACK_INFO for the identifier NID. Furthermore, the CPU 101 sets detection results TBOX_NID_t-2 and TBOX_NID_t-1 of TRACK_INFO_NID as the detection result DBOX included in UNMATCHED_TARGET_OBJ_INFO. Furthermore, the CPU 101 sets an appearance feature amount TSTAT_NID_t included in TRACK_INFO_NID as the appearance feature amount DSTAT included in UNMATCHED_TARGET_OBJ_INFO. The CPU 101 then stores TRACK_INFO_NID in the RAM 102. After the CPU 101 has completed the generation of tracked subject information for all subjects included in UNMATCHED_TARGET_OBJ_INFO, the processing proceeds to step S811.

Next, in step S811, the CPU 101 reads out UNMATCHED_TRACK_INFO from the RAM 102, and executes update processing for that. Specifically, for each piece of UNMATCHED_TRACK_INFO, the CPU 101 sets the current position TBOX_i_t of the tracked subject as the predicted detection result PBOX_i_t predicted in step S801, and stores the resultant in the RAM 102. After the CPU 101 updates the current positions of the subjects included in all pieces of UNMATCHED_TRACK_INFO, and stores the updated positions in the RAM 102 as pieces of TRACK_INFO, the subject tracking processing according to this flowchart ends.

According to the present embodiment as described above, the qualities of feature amounts of a plurality of subjects detected in a captured image of the current frame are determined based on the overlap between the subjects, and the identification processing is adaptively switched using the qualities of feature amounts. As a result, it is expected to improve the accuracy of subject tracking, especially when subjects overlap each other in a captured image.

In the present embodiment, the CPU 101 executes identification processing between a tracked subject and a detected subject based on the appearance cost matrix R in the first identification processing and based on the distance cost matrix D in the second identification processing. However, each type of identification processing is not limited to the above-described type of processing. For example, the CPU 101 may calculate the appearance cost matrix R and the distance cost matrix D in advance, and may give a higher weight to the appearance cost matrix R in the first identification processing and a higher weight to the distance cost matrix D in the second identification processing, thereby generating a new cost matrix.

In the present embodiment, the distance cost matrix D is generated by the CPU 101 calculating the upper center point of the frame of each detection result of the tracked subject and the detected subject. However, the method of calculating the distance cost matrix D is not limited to this. For example, under imaging conditions where the upper body of a subject is likely to be occluded, the CPU 101 can execute the above-described identification processing with a reduced influence of the upper body of the subject being occluded, by calculating the distance cost matrix D from the lower center point of each detection result instead of the upper center point.

In the present embodiment, the camera 100 performs calculations of a drive amount for detecting and tracking a subject by itself. However, the controller 200 may execute some or all of such types of processing. In this case, the camera 100 transmits the captured image to the controller 200. Next, the controller 200 detects a subject from the received captured image, derives drive parameters, which are control values for controlling the drive unit 109 to track the tracked subject using the camera 100, and transmits the derived drive parameters to the camera 100. The camera 100 then operates each unit of the camera 100 in accordance with the received drive parameters to capture an image of the tracked subject. In this case, the processing executed by the inference execution unit 110 of the camera 100 may be performed by the inference execution unit 210 of the controller 200. The software operations of the inference unit 302 and the computation unit 309 of the camera 100 can be replaced by the software operations of the inference unit 306 and the computation unit 310 of the controller 200, respectively.

Second Embodiment

Next, an information processing system according to a second embodiment will be described. In the following description, differences from the first embodiment will be focused on, and unless otherwise specified, it is assumed that the second embodiment is the same as the first embodiment. In the present embodiment, when a subject is detected from an image captured by the camera 100, a plurality of joint points of the subject are detected, and the subject tracking processing is performed based on the detected joint points.

The information processing system 1 according to the present embodiment includes a camera 100 and a controller 200 that is a control device for the camera 100, similar to the first embodiment (FIG. 1). The camera 100 and the controller 200 are connected to a network 400. Thus, the information processing system 1 according to the present embodiment is configured such that the camera 100 and the controller 200 can communicate data with each other via the network 400.

(Configuration of Each Device) Next, a hardware configuration example of each of the camera 100 and the controller 200 will be described with reference to the block diagram of FIG. 2. The configuration illustrated in FIG. 2 is merely an example of the hardware configurations of the camera 100 and the controller 200, and can be changed and/or modified as appropriate. In the present embodiment, the configurations of the inference execution unit 110 of the camera 100 and the inference execution unit 210 of the controller 200 are different from those in the first embodiment.

The inference execution unit 110 performs inference processing to estimate whether any joints of the subject appear in the captured image, the position coordinates of the joints, and the like, and extraction processing to extract the appearance feature amount of each subject from the captured image. The inference execution unit 110 is, for example, a computation device such as a GPU that is specialized for image processing and inference processing. In general, it is effective to use such a GPU for the inference processing. However, processing equivalent to the inference processing may also be implemented by a reconfigurable logic circuit, such as an FPGA. The CPU 101 may be responsible for the processing of the inference execution unit 110.

Next, processing units implemented by the camera 100 and the controller 200 will be described with reference to the block diagram of FIG. 3. In FIG. 3, general-purpose software such as an operating system is omitted from the illustration. In the present embodiment, the configurations of the inference unit 302 of the camera 100 and the inference unit 306 of the controller 200 are different from those in the first embodiment.

The inference unit 302 has a software function of detecting the coordinates of the subject's joints from the captured image by causing the CPU 101 to control the inference execution unit 110, and a software function of extracting the appearance feature amount of the subject included in the captured image.

The inference unit 306 also has a software function for detecting the coordinates of joints of a subject from a captured image received from the camera 100, and a software function for extracting an appearance feature amount of a subject included in a captured image, by causing the CPU 201 to control the inference execution unit 210.

(Operations of Each Device) Next, the operations of the camera 100 and the controller 200 in the information processing system 1 according to the present embodiment will be described. First, the operation of the camera 100 will be described with reference to the flowchart in FIG. 4A. In the present embodiment, the subject detection processing of step S102 differs from that in the first embodiment.

In step S102, the CPU 101 executes the inference unit 302 to input the captured image stored in the RAM 102 in step S101 into the inference execution unit 110, and controls the inference execution unit 110 to detect the coordinates of joints of all subjects in the captured image. Furthermore, the CPU 101 also acquires the position (region) of each subject in the captured image based on the detected coordinates of the joints, and stores information indicating the position of each subject in the RAM 102.

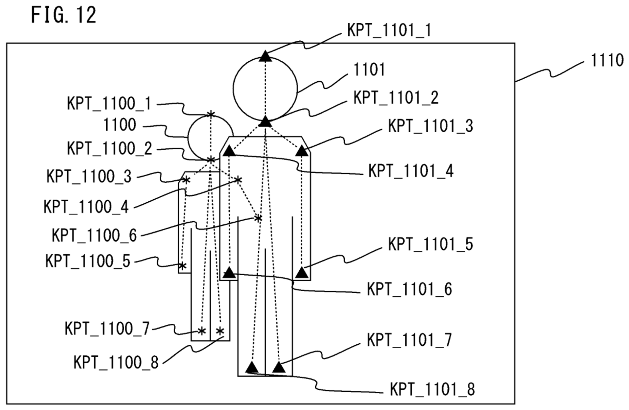

FIG. 12 is a diagram illustrating an example of results of the CPU 101 detecting the coordinates of joints of all subjects included in the captured image 1110. The processing of the CPU 101 detecting subjects in the captured image in the present embodiment will be described with reference to FIG. 12.

FIG. 12 illustrates the captured image 1110 in which the subjects 1100 and 1101 are depicted, and the coordinates of each joint detected by the CPU 101 are indicated by "KPT". For example, "KPT_1100" represents the coordinates of the joints detected for the subject 1100, and KPT_1100_1 represents the coordinates of the first joint. In the present embodiment, as an example, it is assumed that the CPU 101 detects the joints of the top of the head, neck, left shoulder, right shoulder, right hand, left hand, right foot, and left foot for each subject in the captured image 1110. The joints detected by the CPU 101 for the subject 1101 are the same as those detected for the subject 1100. The following description will therefore be given only for the subject 1100. The order of the joint coordinates is not limited to the order described herein.

In FIG. 12, it is assumed that the left shoulder of the subject 1100 is located to the left of the right shoulder in the captured image 1110. Therefore, it is presumed that the subject 1100 is a subject whose back faces the camera 100. In FIG. 12, it is also assumed that the left shoulder of the subject 1101 is located to the right of the right shoulder in the captured image 1110. Therefore, it is presumed that the subject 1101 is a subject whose front faces the camera 100.

The CPU 101 acquires the coordinates of joints of each subject in the captured image 1110, and then acquires the position (region) of each subject based on the acquired coordinates of joints. Specifically, to generate a detection result DBOX for the subject, the CPU 101 uses, as values of the detection result DBOX, the maximum/minimum values in the horizontal direction (left-and-right direction in the figure) and the maximum/minimum values in the vertical direction (up-and-down direction in the figure) in the captured image 1110.

Next, the processing of the CPU 101 determining the detection result DBOX of the subject 1100 will be described using the subject 1100 in FIG. 12 as an example.

To identify the detection result DBOX of the subject 1100, the CPU 101 determines four image coordinate values: the coordinates of the top left vertex (DTOP_1100, DLEFT_1100) and the coordinates of the bottom right vertex (DBOTTOM_1100, DRIGHT_1100). In FIG. 12, for the subject 1100, the maximum value in the horizontal direction in the captured image 1110 is indicated by KPT_1100_6. For the subject 1100, the minimum value in the horizontal direction in the captured image 1110 is indicated by KPT_1100_5. For the subject 1100, the maximum value in the vertical direction in the captured image 1110 is indicated by KPT_1100_1. For the subject 1100, the minimum value in the vertical direction in the captured image 1110 is indicated by KPT_1100_7. Based on these coordinate values, the CPU 101 determines the coordinates of the top left vertex and the bottom right vertex that indicate the detection result BOX of the subject 1100, and stores the information on the determined coordinates in the RAM 102. The CPU 101 determines the detection result DBOX for all subjects in the captured image 1110 and stores the determined results in the RAM 102, and then the processing proceeds to step S103.

In this way, even when the camera 100 acquires the coordinates of joints of a subject in a captured image and infers the subject's position, it is possible to estimate the region of the subject from the joint coordinate information and adaptively switch the identification processing based on the quality of feature amount of each subject.

With respect to the method of calculating the quality of feature amount in the first embodiment, the details of the processing of step S602 have been described with reference to FIG. 7. Even in the present embodiment, the CPU 101 can calculate the quality of feature amount based on the coordinates of joints of a subject. For example, the CPU 101 may calculate, based on the coordinates of joints read from the RAM 102, the quality of feature amount from a difference between sizes of subjects whose skeletons defined from pairs of joints determined in advance intersect with each other. In this case, the degree of overlap between a tracked subject and another subject is the degree of overlap between the tracked subject and a subject whose skeleton intersects with a skeleton of the tracked subject.

For example, in FIG. 12, dotted lines connecting the coordinates of joints correspond to skeletons of the subject, and a skeleton indicated by a dotted line connecting KPT_1100_2 and KPT_1100_4 corresponds to the right shoulder of the subject 1100. Furthermore, the skeleton of the right shoulder of the subject 1100 intersects with the skeleton of the right arm of the subject 1101, which is indicated by a dotted line connecting KPT_1101_4 and KPT_1101_6. Therefore, the CPU 101 calculates the qualities of feature amounts of the subjects 1100 and 1101 by using a difference between the maximum and minimum values of the vertical coordinates of the joints of each subject as the size of the subject for comparison. For example, when the size of the subject 1100 is SIZE1100 and the size of the subject 1101 is SIZE1101, the CPU 101 calculates the qualities of feature amounts of the subjects 1100 and 1101 using the following Equations 10 and 11, respectively.

$$QUAL\_1100,1101 = SIZE1100/\max(SIZE1100.SIZE1101) \quad \text{(Equation 10)}$$

$$QUAL\_1101,1100 = SIZE1101/\max(SIZE1100.SIZE1101) \quad \text{(Equation 11)}$$

According to Equations 10 and 11, the CPU 101 can acquire the quality of feature amount of each of the subjects 1100 and 1101 as a numerical value ranging from 0 to 1, and adaptively switch the identification processing, as in the first embodiment.

Note that the above-described various types of control may be processing that is carried out by one piece of hardware (e.g., processor or circuit), or otherwise. Processing may be shared among a plurality of pieces of hardware (e.g., a plurality of processors, a plurality of circuits, or a combination of one or more processors and one or more circuits), thereby carrying out the control of the entire device.

Also, the above processor is a processor in the broad sense, and includes general-purpose processors and dedicated processors. Examples of general-purpose processors include a central processing unit (CPU), a micro processing unit (MPU), a digital signal processor (DSP), and so forth. Examples of dedicated processors include a graphics processing unit (GPU), an application-specific integrated circuit (ASIC), a programmable logic device (PLD), and so forth. Examples of PLDs include a field-programmable gate array (FPGA), a complex programmable logic device (CPLD), and so forth.

The embodiment described above (including variation examples) is merely an example. Any configurations obtained by suitably modifying or changing some configurations of the embodiment within the scope of the subject matter of the present disclosure are also included in the present disclosure. The present disclosure also includes other configurations obtained by suitably combining various features of the embodiment.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1. An information processing device comprising:

   acquisition means to acquire a position and a feature amount of each of a plurality of subjects detected from a captured image; and
   tracking means to track one of the plurality of subjects in association with a tracked subject that is to be tracked, based on the position and the feature amount of each of the plurality of subjects acquired by the acquisition means,
   wherein the tracking means performs, when a degree of overlap between the tracked subject and another subject is a first value, a first association to associate any one of the plurality of subjects with the tracked subject using a similarity of the feature amount, and
   the tracking means performs, when the degree of overlap between the tracked subject and the other subject is a second value that is a value indicating less overlap than the first value, a second association to associate any one of the plurality of subjects with the tracked subject using a similarity of the position.

2. The information processing device according to claim 1, wherein the degree of overlap is a value obtained by dividing an area of a region where a first subject and a second subject overlap in the captured image by an area of a region of the first subject in the captured image.

3. The information processing device according to claim 1 or 2, wherein the acquisition means detects one or more joint points forming each subject and acquires the position of the subject from the detected one or more joint points.

4. The information processing device according to claim 3, wherein the acquisition means acquires the position of each subject based on a skeleton of the subject determined by the detected one or more joint points, and the degree of overlap is a degree of overlap between the tracked subject and a subject whose skeleton intersects with the skeleton of the tracked subject.

5. The information processing device according to any one of claims 1 to 4, wherein the degree of overlap is based on at least one of an area, a width, and a height of each subject in the captured image.

6. The information processing device according to any one of claims 1 to 5, wherein when the degree of overlap between the tracked subject and the other subject is the first value, the tracking means makes a contribution rate of the similarity of the feature amount be higher than a contribution rate of the similarity of the position to perform the first association.

7. The information processing device according to any one of claims 1 to 6, wherein when the degree of overlap between the tracked subject and the other subject is the second value, the tracking means makes a contribution rate of the similarity of the position be higher than a contribution rate of the similarity of the feature amount to perform the second association.

8. The information processing device according to claim 7, wherein the tracking means calculates the similarity of the position based on one or more points in a region of each subject to perform the second association.

9. The information processing device according to claim 8, wherein the one or more points are upper points or center points in the region of each subject.

10. The information processing device according to any one of claims 1 to 9, wherein the tracking means performs the second association on a subject that is not associated by the first association among the plurality of subjects.

11. A method of controlling an information processing device, comprising the steps of:

acquiring a position and a feature amount of each of a plurality of subjects detected from a captured image; and
tracking one of the plurality of subjects in association with a tracked subject that is to be tracked, based on the position and the feature amount of each of the plurality of subjects acquired at the step of acquiring,
wherein
the step of tracking includes:

performing, when a degree of overlap between the tracked subject and another subject is a first value, a first association to associate any one of the plurality of subjects with the tracked subject using a similarity of the feature amount; and
performing, when the degree of overlap between the tracked subject and the other subject is a second value that is a value indicating less overlap than the first value, a second association to associate any one of the plurality of subjects with the tracked subject using a similarity of the position.

12. An imaging device that controls an imaging direction horizontally or vertically by a rotation mechanism, the imaging device comprising:

acquisition means to acquire a position and a feature amount of each of a plurality of subjects detected from a captured image;
tracking means to track one of the plurality of subjects in association with a tracked subject that is to be tracked, based on the position and the feature amount of each of the plurality of subjects acquired by the acquisition means;
determination means to determine a control value for controlling the rotation mechanism to capture an image of the tracked subject; and
control means to control the rotation mechanism based on the control value,
wherein the tracking means performs, when a degree of overlap between the tracked subject and another subject is a first value, a first association to associate any one of the plurality of subjects with the tracked subject using a similarity of the feature amount, and
the tracking means performs, when the degree of overlap between the tracked subject and the other subject is a second value that is a value indicating less overlap than the first value, a second association to associate any one of the plurality of subjects with the tracked subject using a similarity of the position.

13. An information processing system comprising an imaging device that controls an imaging direction horizontally or vertically by a rotation mechanism and an information processing device, the information processing device comprising:

acquisition means to acquire a position and a feature amount of each of a plurality of subjects detected from a captured image;

tracking means to track one of the plurality of subjects in association with a tracked subject that is to be tracked, based on the position and the feature amount of each of the plurality of subjects acquired by the acquisition means;

determination means to determine a control value for controlling the rotation mechanism to capture an image of the tracked subject; and

output means to output the determined control value to the imaging device,

the imaging device comprising:

control means to control the rotation mechanism based on the output control value,

wherein the tracking means performs, when a degree of overlap between the tracked subject and another subject is a first value, a first association to associate any one of the plurality of subjects with the tracked subject using a similarity of the feature amount, and

tracking means performs, when the degree of overlap between the tracked subject and the other subject is a second value that is a value indicating less overlap than the first value, a second association to associate any one of the plurality of subjects with the tracked subject using a similarity of the position.

14. A computer program comprising instructions which, when the program is executed by a computer, cause the computer to carry out function of each means of the information processing device according to any one of claims 1 to 10.

15. A computer readable medium storing a computer program comprising instructions which, when the program is executed by a computer, cause the computer to carry out function of each means of the information processing device according to any one of claims 1 to 10.

FIG. 1

100

200

400

1

FIG. 2

EP 4 769 306 A1

FIG. 3

100

301 — IMAGING UNIT

302 — INFERENCE UNIT

303 — DRIVE CONTROL UNIT

309 — COMPUTATION UNIT

304 — COMMUNICATION UNIT

200

305 — USER INTERFACE UNIT

306 — INFERENCE UNIT

310 — COMPUTATION UNIT

308 — COMMUNICATION UNIT

FIG. 4A

```
                    ( START )
                        │
         ┌──────────────┘
         │    ┌──────────────────────────────┐
         │    │   ACQUIRE CAPTURED IMAGE      │╌╌ S101
         │    └──────────────────────────────┘
         │                │
         │    ┌──────────────────────────────────┐
         │    │ DETECT ALL SUBJECTS FROM         │╌╌ S102
         │    │       CAPTURED IMAGE             │
         │    └──────────────────────────────────┘
         │                │
         │    ┌──────────────────────────────────┐
         │    │ ASSIGN IDENTIFICATION INFORMATION│╌╌ S103
         │    │   TO ALL DETECTED SUBJECTS       │
         │    └──────────────────────────────────┘
         │                │
         │    ┌──────────────────────────────────┐
         │    │   TRANSMIT CAPTURED IMAGE,        │╌╌ S104
         │    │    DETECTION RESULTS, AND         │
         │    │   IDENTIFICATION INFORMATION      │
         │    └──────────────────────────────────┘
         │                │
         │          ◇ HAS IDENTIFICATION ◇              S105
         │          < INFORMATION OF TRACKED >── NO ──┐
         │          ◇ SUBJECT BEEN RECEIVED? ◇         │
         │                │ YES                        │
         │    ┌──────────────────────────────┐  ┌──────────────────────────┐
         │    │ SELECT TRACKED SUBJECT BASED │  │  SELECT TRACKED SUBJECT   │
         │    │  ON IDENTIFICATION           │  │  BASED ON USER DESIGNATION│
         │    │  INFORMATION          S106   │  │               S107        │
         │    └──────────────────────────────┘  └──────────────────────────┘
         │                │                            │
         │                └────────────┬───────────────┘
         │    ┌──────────────────────────────────────┐
         │    │ CALCULATE ANGULAR VELOCITIES IN       │╌╌ S108
         │    │  ROTATION TO DIRECTIONS OF            │
         │    │  TRACKED SUBJECT                      │
         │    └──────────────────────────────────────┘
         │                │
         │    ┌──────────────────────────────┐
         │    │        DRIVE CAMERA          │╌╌ S109
         │    └──────────────────────────────┘
         │                │
         │    ┌──────────────────────────────────┐
         │    │ STORE DETECTION RESULT OF SUBJECT │╌╌ S110
         │    └──────────────────────────────────┘
         │                │
         │          ◇ IS TRACKING ◇                    S111
         └── NO ────< ENDED? >
                    ◇         ◇
                        │ YES
                    ( END )
```

22

FIG. 4B

```
                    ┌──────────────┐
                    │    START     │
                    └──────┬───────┘
                           │
      ┌────────────────────┤
      │                    ▼
      │              ╱─────────────╲                        S201
      │            ╱                 ╲
      │  NO      ╱   HAVE CAPTURED     ╲
      ◄─────────  IMAGE, DETECTION      
                ╲  RESULT, AND          ╱
                  ╲ IDENTIFICATION    ╱
                    ╲ INFORMATION    ╱
                      ╲ RECEIVED?   ╱
                        ╲─────┬───╱
                              │ YES
                              ▼                              S202
      │              ┌──────────────────────────────────┐
      │              │ DISPLAY CAPTURED IMAGE AND        │
      │              │ DETECTION RESULT                  │
      │              └──────────────┬───────────────────┘
      │                             │
      │                             ▼                       S203
      │  NO              ╱───────────────────╲
      └─────────────────   IS TRACKED SUBJECT  
                         ╲    SELECTED?        ╱
                           ╲───────┬─────────╱
                                   │ YES
                                   ▼                         S204
                   ┌──────────────────────────────────┐
                   │ TRANSMIT IDENTIFICATION           │
                   │ INFORMATION OF TRACKED SUBJECT    │
                   └──────────────┬───────────────────┘
                                  │
                                  ▼
                          ┌──────────────┐
                          │     END      │
                          └──────────────┘
```

FIG. 5A

FIG. 5B

FIG. 6

```
        ┌─────────────┐
        │    START    │
        └─────────────┘
               │
               ▼
┌──────────────────────────────────┐  S601
│   EXTRACT FEATURE AMOUNTS FROM    │
│  SUBJECT REGIONS IN CAPTURED IMAGE│
└──────────────────────────────────┘
               │
               ▼
┌──────────────────────────────────┐  S602
│   CALCULATE QUALITY OF FEATURE    │
│  AMOUNT FOR EACH SUBJECT BASED ON │
│   DEGREE OF OVERLAP OF SUBJECTS   │
└──────────────────────────────────┘
               │
               ▼
┌──────────────────────────────────┐  S603
│    PROCESSING OF TRACKING SUBJECT │
└──────────────────────────────────┘
               │
               ▼
        ┌─────────────┐
        │     END     │
        └─────────────┘
```

FIG. 7

```
          ( START )
              │
              ▼
     ┌─────────────────┐  S701
     │   SET i TO 1    │
     └─────────────────┘
              │
              ▼
         ╱─────────╲  S702
  YES   ╱ i > NUMBER OF ALL ╲
◄──────╱  DETECTION RESULTS? ╲
        ╲                   ╱
         ╲─────────╲───────╱
              │ NO
              ▼
     ┌─────────────────┐  S703
     │  READ OUT DBOX_i │
     └─────────────────┘
              │
              ▼
     ┌─────────────────┐  S704
     │   SET j TO 1    │
     └─────────────────┘
              │
              ▼
         ╱─────────╲  S705
  YES   ╱ j > NUMBER OF ALL ╲
◄──────╱  DETECTION RESULTS? ╲
        ╲                   ╱
         ╲─────────╲───────╱
              │ NO
              ▼
     ┌─────────────────┐  S706
     │  READ OUT DBOX_j │
     └─────────────────┘
              │
              ▼
     ┌─────────────────┐  S707
     │ CALCULATE QUALITY OF │
     │ FEATURE AMOUNT QUAL_i,j │
     └─────────────────┘
              │
              ▼
     ┌─────────────────┐  S708
     │     j += 1      │
     └─────────────────┘
              │
              ▼
     ┌─────────────────┐  S709
     │ DETERMINE QUALITY OF FEATURE │
     │ AMOUNT QUAL_i FOR DBOX_i │
     └─────────────────┘
              │
              ▼
     ┌─────────────────┐  S710
     │     i += 1      │
     └─────────────────┘
              │
              ▼
          (  END  )
```

FIG. 8

```
                    ( START )
                        │
                        ▼
    ┌───────────────────────────────────────────┐ ─── S801
    │  PREDICT DETECTION RESULT PBOX OF TRACKED  │
    │         SUBJECT IN CURRENT FRAME           │
    └───────────────────────────────────────────┘
                        │
                        ▼
    ┌───────────────────────────────────────────┐ ─── S802
    │  SET OBJ_INFO IN WHICH QUALITY OF FEATURE  │
    │ AMOUNT QUAL IS HIGHER THAN THRESHOLD VALUE th, │
    │   AS PROCESSING TARGET TARGET_OBJ_INFO     │
    └───────────────────────────────────────────┘
                        │
                        ▼
    ┌───────────────────────────────────────────┐ ─── S803
    │   EXECUTE FIRST IDENTIFICATION PROCESSING   │
    │   BASED ON TRACK_INFO AND TARGET_OBJ_INFO   │
    └───────────────────────────────────────────┘
                        │
                        ▼
    ┌───────────────────────────────────────────┐ ─── S804
    │  UPDATE CURRENT POSITION OF IDENTIFIED TRACKED │
    │  SUBJECT WITH IDENTIFIED TARGET_OBJ_INFO    │
    └───────────────────────────────────────────┘
                        │
                        ▼
    ┌───────────────────────────────────────────┐ ─── S805
    │   COMBINE UNMATCHED_TARGET_OBJ_INFO AND     │
    │ NON_TARGET_OBJ_INFO AND SET RESULTANT AS TARGET_OBJ_INFO │
    └───────────────────────────────────────────┘
                        │
                        ▼
    ┌───────────────────────────────────────────┐ ─── S806
    │  EXECUTE SECOND IDENTIFICATION PROCESSING BASED │
    │  ON UNMATCHED_TRACK_INFO AND TARGET_OBJ_INFO │
    └───────────────────────────────────────────┘
                        │
                        ▼
    ┌───────────────────────────────────────────┐ ─── S807
    │    UPDATE CURRENT POSITION OF IDENTIFIED     │
    │  TRACKED SUBJECT WITH IDENTIFIED TARGET_BOX  │
    └───────────────────────────────────────────┘
                        │
                        ▼
    ┌───────────────────────────────────────────┐ ─── S808
    │  EXECUTE THIRD IDENTIFICATION PROCESSING BASED ON │
    │ UNMATCHED_TRACK_INFO AND UNMATCHED_TARGET_OBJ_INFO │
    └───────────────────────────────────────────┘
                        │
                        ▼
    ┌───────────────────────────────────────────┐ ─── S809
    │ UPDATE CURRENT POSITION OF IDENTIFIED TRACKED │
    │ SUBJECT WITH IDENTIFIED UNMATCHED_TARGET_OBJ_INFO │
    └───────────────────────────────────────────┘
                        │
                        ▼
    ┌───────────────────────────────────────────┐ ─── S810
    │  GENERATE TRACK_INFO FOR NEW ID FROM NON-   │
    │   IDENTIFIED UNMATCHED_TARGET_OBJ_INFO      │
    └───────────────────────────────────────────┘
                        │
                        ▼
    ┌───────────────────────────────────────────┐ ─── S811
    │  UPDATE NON-IDENTIFIED UNMATCHED_TRACK_INFO │
    └───────────────────────────────────────────┘
                        │
                        ▼
                    (  END  )
```

27

FIG. 9A

FIG. 9B

FIG. 10

FIG. 11

1001c_t-2

1001c_t-1

1001c_t

1100a

1001b

1100b

FIG. 12

KPT_1101_1

1101

KPT_1101_2

KPT_1101_3

KPT_1101_4

KPT_1100_1

1100

KPT_1100_2

KPT_1100_3

KPT_1100_4

KPT_1100_6

KPT_1100_5

KPT_1100_7

KPT_1100_8

KPT_1101_5

KPT_1101_6

KPT_1101_7

KPT_1101_8

1110

Europäisches
Patentamt
European
Patent Office
Office européen
des brevets

# EUROPEAN SEARCH REPORT

**Application Number**

EP 25 22 6733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DA TANG ET AL: "Combining Mean-Shift and Particle Filter for Object Tracking", IMAGE AND GRAPHICS (ICIG), 2011 SIXTH INTERNATIONAL CONFERENCE ON IEEE, 12 August 2011 (2011-08-12), pages 771-776, XP032048633, DOI: 10.1109/ICIG.2011.118 ISBN: 9781457715600 | 1-3, 5-11,14, 15 | INV. G06T7/20 |
| Y A | * the whole document * | 12,13 4 | |
| Y | Ambrish Tyagi: "LAYERED TRACKER SWITCHING FOR VISUAL SURVEILLANCE", Dissertation, 1 January 2008 (2008-01-01), XP055389946, Retrieved from the Internet: URL:https://etd.ohiolink.edu/!etd.send_fil e?accession=osu1218257609&disposition=atta chment [retrieved on 2017-07-11] * page 9 * * page 150 - page 195 * | 12,13 | |

TECHNICAL FIELDS
SEARCHED (IPC)

G06T

The present search report has been drawn up for all claims

| Place of search | Date of completion of the search | Examiner |
|---|---|---|
| Munich | 17 April 2026 | Celik, Hasan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DU, YUNHAO et al.** Strongsort: Make deepsort great again.. *IEEE Transactions on Multimedia*, 2023, vol. 25, 8725-8737